(19) Europäisches Patentamt

European Patent Office

Office européen des brevets

(11) **EP 1 020 473 B1**

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(51) Int Cl.$^7$: **C07F 7/14**

(21) Anmeldenummer: **99124116.7**

(22) Anmeldetag: **02.12.1999**

(54) **Verfahren zur Herstellung von Propylsilanen**

Process for preparing propyl silanes

Procédé de preparation de propyl silanes

(84) Benannte Vertragsstaaten:
**BE DE FR GB IT NL**

(30) Priorität: **11.12.1998 DE 19857223**

(43) Veröffentlichungstag der Anmeldung:
**19.07.2000 Patentblatt 2000/29**

(73) Patentinhaber: **Degussa AG**
**40474 Düsseldorf (DE)**

(72) Erfinder:
• **Kräuter, Thomas, Dr.**
**35315 Homberg/Ohm (DE)**
• **Seebald, Steffen, Dr.**
**63538 Grosskrotzenburg (DE)**
• **Batz-Sohn, Christioph, Dr.**
**63452 Hanau/Main (DE)**
• **Karch, Ralf, Dr.**
**63801 Kleinostheim (DE)**
• **Prinz, Matthias**
**63579 Freigericht (DE)**

• **Lansink, Hermanus G.J, Dr.**
**63770 Mömbris-Mensengesäss (DE)**

(56) Entgegenhaltungen:
**DD-A- 117 021          DE-A- 4 119 994**

• **DATABASE CA [Online] CHEMICAL ABSTRACTS SERVICE, COLUMBUS, OHIO, US; BELYAKOVA, Z. V. ET AL: "Hydrosilylation of unsaturated compounds in the presence of platinum complexes" retrieved from STN Database accession no. 99:175875 XP002182146 & ZH. OBSHCH. KHIM. (1983), 53(7), 1591-6 ,**
• **DATABASE CA [Online] CHEMICAL ABSTRACTS SERVICE, COLUMBUS, OHIO, US; KORNETKA, ZYGMUNT WLADYSHAW ET AL: "Organosilicon compounds" retrieved from STN Database accession no. 99:88364 XP002182147 & PL 117 627 B (UNIVERSITET IM. ADAMA MICKIEIWCZA, POL.) 31. August 1981 (1981-08-31)**

**Beschreibung**

Die Erfindung betrifft ein Verfahren zur Herstellung von 3-funktionalisierten Propylsilanen aus Hydrogensilanen und Allylverbindungen.

Hydrogensilane, wie z. B. Trichlorsilan können in Gegenwart von Allylverbindungen mit Hilfe von platinhaltigen Katalysatoren zu 3-Chlorpropylsilan umgesetzt werden *[vgl. beispielsweise US 4 533 744, US 4 276 426, US 4 089 882, PL 117 627, DD 117 021, Zh. Obshch. Khim (1983), 53 (7) 1591-6]*. Diese Reaktion wird im allgemeinen als Hydrosilylierung bezeichnet (siehe beispielsweise Gleichung I).

$$Cl\text{-}CH_2\text{-}CH=CH_2 + HSiCl_3 \rightarrow Cl\text{-}CH_2\text{-}CH_2\text{-}CH_2\text{-}SiCl_3 \tag{I}$$

Die Reaktion kann mit platinhaltigen Katalysatoren homogen oder heterogen durchgeführt werden. Im Falle der homogen katalysierten Herstellung werden lösliche Platinverbindungen, beispielsweise $H_2PtCl_6$ x 6 $H_2O$, als Katalysator eingesetzt (DE-AS 198 25 793.7, DE-OS 28 51 456, CS-PS 176 910, US-PS 4 292 433, US-PS 4 292 434, DE-AS 11 87 240, DE-PS 11 65 028). Für heterogene Hydrosilylierungen benutzt man geträgerte Platinkatalysatoren (US-PS 2 637 738, DE-PS 20 12 229, DE-PS 28 15 316).

Es ist bekannt, daß bei der Umsetzung von z. B. Allylchlorid mit Hydrogensilanen zu 3-Chlorpropylsilanen ein Teil des eingesetzten Allylchlorids mit dem Hydrogensilan in einer Nebenreaktion unter Bildung von Propen und dem jeweiligen Chlorsilan reagiert (siehe beispielsweise Gleichung II).

$$Cl\text{-}CH_2\text{-}CH=CH_2 + HSiCl_3 \rightarrow CH_3\text{-}CH=CH_2 + SiCl_4 \tag{II}$$

Bei der Umsetzung von Allylchlorid mit Trichlorsilan können bis zu 25 - 30 % des eingesetzten Allylchlorids durch diese Nebenreaktion mit Trichlorsilan in Propen und Siliciumtetrachlorid umgewandelt werden. Das Molverhältnis Chlorpropylsilan zu Siliciumtetrachlorid im Rohprodukt ist ein Maß für die Selektivität der Reaktion und erreicht typischerweise Werte zwischen 2,33 : 1 (70 % Ausbeute, bezogen auf eingesetztes Allylchlorid) und 3 : 1 (75 % Ausbeute).

Es ist weiterhin bekannt, daß durch spezielle Reaktionsführung in Druckapparaturen die Propenbildung gemindert werden kann; jedoch hat diese Arbeitsweise zur Folge, daß das im Rahmen der Nebenreaktion anfallende Propen quantitativ mit dem eingesetzten Hydrogensilan zu Propylsilan weiterreagiert. Auch bei den unter Normaldruck in der üblichen Art durchgeführten Reaktionen setzt sich in beträchtlichem Umfang das Propen zu dem entsprechenden Propylsilan um (DE 34 04 703) (siehe beispielsweise Gleichung *III*).

$$CH_3\text{-}CH=CH_2 + HSiCl_3 \rightarrow CH_3\text{-}CH_2\text{-}CH_2\text{-}SiCl_3 \tag{III}$$

So werden z. B. in einer technischen Anlage bei einer heterogen-katalytischen Umsetzung von Allylchlorid und Trichlorsilan in einer mit einem Platin-Aktivkohlekatalysator gefüllten Säule pro 1000 kg 3-Chlorpropyltrichlorsilan bis zu 230 kg Propyltrichlorsilan erhalten, was einen Mehrbedarf von ca. 28 % Trichlorsilan bedeutet (DE 41 19 994). Neben dem zusätzlichen Bedarf an Trichlorsilan entstehen weitere Schwierigkeiten durch die schwierige Abtrennung und kostspielige Entsorgung der unerwünschten Propylsilane.

Es besteht somit die Aufgabe, ein Verfahren zur Herstellung von 3-funktionalisierten Propylsilanen zu entwickeln, das diese Nachteile nicht aufweist, *wobei ein Katalysator eingesetzt wird, der Platin enthält und auf einem Kohlenstoff-basierenden Träger beruht.*

Gegenstand der Erfindung ist ein Verfahren zur Herstellung von 3-funktionalisierten Propylsilanen durch Addition von Allylverbindungen der allgemeinen Forml IV

$$H_2C=CH\text{-}CH_2X \tag{IV};$$

wobei X = Cl, Br, I, F, CN, SCN, SH, SR, OH, NRR[1] oder OR sein kann und R und R[1], beide unabhängig voneinander, ($C_1$ - $C_6$)-Alkyl oder ($C_3$ - $C_7$)-Aryl bedeuten, an Silane der Formel V

$$R^2R^3R^4SiH \tag{V},$$

wobei $R^2$, $R^3$, $R^4$, alle unabhängig voneinander, Wasserstoff, Halogen, $(C_1 - C_6)$-Alkyl, $(C_1 - C_6)$-Haloalkyl, $(C_3 - C_6)$-Allyl, $(C_1 - C_4)$-Alkoxy, Phenyl, Aryl oder Aralkyl bedeuten können,

bei Reaktionstemperaturen zwischen 0 °C und 200°C und Drücken zwischen 200 mbar und 10 bar und in Gegenwart eines Katalysators, welches dadurch gekennzeichnet ist, daß der Katalysator ein geträgerter Multielementkatalysators ist, *dereinen Aktivkohle-, Koks- oder Graphit-Träger, Platin und mindestens ein weiteres Element aus der Reihe Titan, Zirkonium, Hafnium, Vanadium, Chrom, Molybdän, Wolfram, Mangan, Rhenium, Eisen, Ruthenium, Osmium, Kobalt, Rhodium, Iridium, Nickel, Kupfer, Silber, Gold, Zink, Aluminium, Gallium, Indium, Zinn, Blei, Antimon, Bismut, Samarium, Schwefel enthält.* Bevorzugt für X ist die Verwendung eines Halogens, insbesondere Chlor.

Als Silan der Formel V können Trichlorsilan, Methylhydrogendichlorsilan, Propylhydrogendichlorsilan oder Dimethylhydrogenchlorsilan verwendet werden.

Der Einsatz des Katalysators im erfindungsgemäßen Verfahren ist bei Normaldruck, Über- und Unterdruck möglich. Bevorzugt wird dabei bei Drücken zwischen 200 mbar und 10 bar, insbesondere bei 800 mbar, gearbeitet. Besonders bevorzugt wird ein Druck zwischen 800 mbar und 2 bar.

Der Einsatz des Katalysators im erfindungsgemäßen Verfahren kann einerseits im Batchverfahren erfolgen, das heißt, daß man die Allylverbindung und das im Überschuß eingesetzte Hydrogensilan in einem geeigneten Gefäß gemeinsam mit dem Katalysator solange bei Temperaturen zwischen 0 °C und 200°C und Drücken zwischen 200 mbar und 10 bar zur Reaktion bringt, bis alles Allylchlorid umgesetzt ist. Andererseits kann der Katalysator auch im kontinuierlichen Verfahren eingesetzt werden. Er wird in einen Reaktor eingefüllt und bei Temperaturen zwischen 0 °C und 200 °C und Drücken zwischen 200 mbar und 10 bar von einem Gemisch aus der Allylverbindung und dem im Überschuß eingesetzten Hydrogensilan überströmt; dabei findet die Umsetzung zum entsprechenden Chlorpropylsilan statt.

Der Katalysators im erfindungsgemäßen Verfahren enthält einen Träger, Platin und mindestens ein weiteres Element.

Als Trägermaterialien können alle Kohlen in Frage kommen. Beispiele für Träger sind Aktivkohlen, Kokse und Graphite. Besonders bevorzugt als Trägermaterialien sind Aktivkohlen. Die Trägermaterialien können als Granulat, Extrudat, Kugel oder in sonst üblichen Formen vorliegen. Der Katalysator kann durch Imprägnierung, Adsorption, Tränkung oder Fällung der aktiven Komponenten auf den Träger hergestellt werden.

Als Platinkomponente können sowohl anorganische Platinverbindungen, beispielsweise Hexachloroplatinsäure, Platinnitrat, Platintetraminchlorid, Platintetraminnitrat, Platinacetat, Platintetramincarbonat, Platinsulfitsäure, Platinoxidhydrat, als auch organische und/oder metallorganische Platinverbindungen, beispielsweise Methylethanolaminhexahydroxoplatinat, Platintetrakis(triphenylphosphan), Platinacetylacetonat, eingesetzt werden. Die Herstellung von Platinverbindungen im Allgemeinen ist beschrieben in Gmelins Handbuch der Anorganischen Chemie", 8. Auflage, Band 68. Die platinhaltigen Verbindungen können dabei einzeln oder in beliebigen Gemischen auf den Träger aufgebracht werden. Die Konzentration des Platin auf dem Träger kann 0,05 bis 10 Gew.-%, vorzugsweise 0,2 bis 5 Gew.-%, bezogen auf den Träger, betragen. Das Platin kann ionisch oder elementar auf dem Träger vorliegen.

Als weitere Elemente des Katalysators können Titan, Zirkonium, Hafnium, Vanadium, Chrom, Molybdän, Wolfram, Mangan, Rhenium, Eisen, Ruthenium, Osmium, Kobalt, Rhodium, Iridium, Nickel, Kupfer, Silber, Gold, Zink, Aluminium, Gallium, Indium, Zinn, Blei, Antimon, Bismut, Samarium und/oder Schwefel auf den Träger aufgebracht werden. Bevorzugt eingesetzt werden Titan, Eisen, Ruthenium, Kobalt, Rhodium, Iridium, Nickel, Palladium, Aluminium, Indium, Zinn und/oder Schwefel. Besonders bevorzugt werden Aluminium, Indium und Schwefel. Die Elemente können dabei einzeln oder in beliebigen Kominationen zusätzlich zum Platin aufgebracht werden.

Die zusätzlich zum Platin eingesetzten Metalle werden als wäßrige oder alkoholische Lösungen ihrer anorganischen Salze aufgebracht. Beispielsweise als Palladiumnitrat, Rutheniumchlorid, Rhodiumchlorid, Indiumnitrat, Aluminiumnitrat, Bismutoxid oder Kobaltchlorid. Das Aufbringen der Metallkomponenten kann sowohl konzertiert als auch sequentiell in beliebiger Reihenfolge zum Aufbringen der Platinkomponente erfolgen. Die Metallverbindungen werden auf dem Träger mit Wasserstoff bei Temperaturen oberhalb von 400°C reduziert. Diese Reduktionsart wird nicht angewendet, wenn eines der aufgebrachten Elemente Schwefel ist.

Der Schwefel wird als schwefelhaltige Verbindung auf den Träger aufgebracht. Bei der schwefelhaltigen Komponente kann es sich um ein Sulfat, Sulfit, Sulfid, Sulfoxid, Sulfan, Polysulfan oder Thiol oder ganz allgemein um Schwefelverbindungen handeln, bei denen der Schwefel in den formalen Oxidationsstufen -2 bis +6 vorliegt. Beispiele dafür sind insbesondere Dimethylsulfoxid, Dimethylsulfid, Thioharnstoff, Thioacetamid, Natriumsulfid und Tetrahydrothiophen. Die schwefelhaltigen Verbindungen können dabei einzeln oder in beliebigen Gemischen Anwendung finden.

Als schwefelhaltige Komponente können auch metallorganische Platinverbindungen eingesetzt werden, die am Platinatom über ein oder mehrere schwefelhaltige, organische Gruppen verfügen, beispielsweise $(THT)_2PtCl_2$ (THT = Tetrahydrothiophen, E.G. Cox et al., J. Chem. Soc. A (1934), 182), $(DMSO)_2PtCl_2$ (DMSO = Dimethylsulfoxid, J.H. Pierce et al., Inorg. Chem. 11 (1972), 182) oder $(Et_2S)_2PtCl_2$, (E.G. Cox et al., J. Chem. Soc. A (1934), 182).

Das Aufbringen der schwefelhaltigen Platinkomponente auf den Träger erfolgt nach bekannten Methoden aus der Literatur (C.N. Satterfield, Heterogeneous Catalysis in Practice, McGraw-Hill Book Company, New York 1980, 68ff; J. Hagen, Technische Katalyse, VCH Verlag, Weinheim 1996, 87ff; J. Falbe, U. Hasserodt, Katalysatoren, Tenside und Mineralöladditive, Georg Thieme Verlag, Stuttgart 1978, 7ff), wobei das Aufbringen der schwefelhaltigen Komponente auf den Träger vor dem Einsatz in der Hydrosilylierungsreaktion erfolgen kann oder während der Reaktion mit dem Eduktgemisch (in-situ). Die schwefelhaltige Platinkomponente kann nach Aufbringen auf den Träger reduziert werden oder aber in der oxidativen Form belassen werden.

Das molare Verhältnis zwischen Platin und den weiteren Elementen auf dem Träger kann 0,001 :1 bis 100 : 1 betragen, bevorzugt 0,01 : 1 bis 50 : 1, besonders bevorzugt 0,05 : 1 bis 20: 1. Die Gesamtmenge an Platin und den weiteren Elementen auf dem Träger beträgt 0,01 bis 20 Gew.-%, bevorzugt 0,1 bis 10 Gew.-%.

Die nachfolgenden Beispiele 1 bis 6 demonstrieren exemplarisch die Herstellung der Katalysatoren. Die Beispiele 7 und 8 dienen als Vergleichsbeispiele. In den Beispielen 9 bis 14 wird der Einsatz der Katalysatoren in dem erfindungsgemäßen Verfahren beschrieben, die Beispiele 15 und 16 dienen auch hier als Vergleichsbeispiele.

Unter der Angabe der Selektivität wird dabei das Molverhältnis zwischen dem gewünschten Produkt 3-Chlorpropyltrichlorsilan (Cl-PTS) und Siliciumtetrachlorid verstanden. Die erfindungsgemäßen Beispiele demonstrieren dabei durch die erzielten Selektivitäten und die Ausbeuten an 3-Chlorpropyltrichlorsilan die Überlegenheit dieser Katalysatoren gegenüber herkömmlichen heterogenen Katalysatoren im erfindungsgemäßen Verfahren.

Beispiel 1

In einem 1l PE-Gefäß werden 99,0 g Aktivkohle mit einer wässrigen Lösung von 2,1 g Hexachloroplatinsäure belegt und bei 100°C im Luftstrom getrocknet. Das Material wird anschließend bei 400°C mit einem $H_2/N_2$-Gasgemisch (5% $H_2$) reduziert, mit Wasser gewaschen und bei 120°C im Vakuumtrockenschrank 12 h getrocknet.

Zu dem trockenen Material wird eine wässrige Lösung mit 3,23 g Dimethylsulfoxid und anschließend eine wässrige Lösung mit 1,55 g Hydrazin gegeben. Die abschließende Trocknung erfolgt bei 105°C.

Beispiel 2

In einem 1l PE-Gefäß werden 99,0 g Aktivkohle mit einer wässrigen Lösung von 2,1 g Hexachloroplatinsäure und 2,42 g Dimethylsulfoxid belegt und bei 100°C im Luftstrom getrocknet. Anschließend wird das Material in einer wässrigen Hydrazinlösung mit 10,33 g Hydrazin reduziert. Das Material wird anschließend mit Wasser gewaschen und bei 105°C im Vakuumtrockenschrank 12 h getrocknet.

Beispiel 3

In einem 1l PE-Gefäß werden 99,0 g Aktivkohle mit einer wässrigen Lösung von 2,1 g Hexachloroplatinsäure und 3,23 g Dimethylsulfoxid belegt und bei 100°C im Luftstrom getrocknet. Anschließend wird das Material in einer wässrigen Hydrazinlösung mit 12,92 g Hydrazin reduziert.

Das Material wird anschließend mit Wasser gewaschen und bei 105°C im Vakuumtrockenschrank 12 h getrocknet.

Beispiel 4

In einem 1l PE-Gefäß werden 99,0 g Aktivkohle mit einer wässrigen Lösung von 1,85 g Hexachloroplatinsäure und 1,14 g Aluminiumnitrat-nonahydrat belegt und bei 100°C im Luftstrom getrocknet. Das Material wird anschließend bei 600°C mit einem $H_2/N_2$-Gasgemisch (5% $H_2$) reduziert, mit Wasser gewaschen und bei 120°C im Vakuumtrockenschrank 12 h getrocknet.

Beispiel 5

In einem 1l PE-Gefäß werden 99,0 g Aktivkohle mit einer wässrigen Lösung von 1,32 g Hexachloroplatinsäure und 1,14 g Indiumnitrat belegt und bei 100°C im Luftstrom getrocknet. Das Material wird anschließend bei 500°C mit einem $H_2/N_2$-Gasgemisch (5% $H_2$) reduziert, mit Wasser gewaschen und bei 120°C im Vakuumtrockenschrank 12 h getrocknet.

Beispiel 6

In einem 1l PE-Gefäß werden 99,0 g Aktivkohle mit einer wässrigen Lösung von 1,32 g Hexachloroplatinsäure und 1,14 g Indiumnitrat belegt und bei 100°C im Luftstrom getrocknet. Das Material wird anschließend bei 600°C mit einem $H_2/N_2$-Gasgemisch (5% $H_2$) reduziert, mit Wasser gewaschen und bei 120°C im Vakuumtrockenschrank 12 h getrocknet.

Beispiel 7 (Vergleichsbeispiel)

In einem 1l PE-Gefäß werden 99,0 g Aktivkohle mit einer wässrigen Lösung von 2,1 g Hexachloroplatinsäure belegt und bei 100°C im Luftstrom getrocknet. Das Material wird anschließend bei 400°C mit einem $H_2/N_2$-Gasgemisch (5% $H_2$) reduziert, mit Wasser gewaschen und bei 120°C im Vakuumtrockenschrank 12 h getrocknet.

Beispiel 8 (Vergleichsbeispiel)

In einem 1l PE-Gefäß werden 99,0 g Aktivkohle mit einer wässrigen Lösung von 2,1 g Hexachloroplatinsäure belegt und bei 100°C im Luftstrom getrocknet. Im Anschluß daran wird das Material in einer wässrigen Hydrazinlösung mit 2,56 g Hydrazin reduziert. Das Material wird anschließend mit Wasser gewaschen und bei 120°C im Vakuumtrokkenschrank 12 h getrocknet.

Beispiel 9

In einem 500 ml Dreihalskolben mit Heizpilz, Magnetrührer, Innenthermometer und einem intensiv auf -30°C gekühlten Rückflußkühler werden 100 g (472 mmol) 3-Chlorpropyltrichlorsilan, 76,6 g (1,0 mol) Allylchlorid und 142,3 g (1,05 mol) Trichlorsilan vermischt und in Anwesenheit von 2,0 g des erfindungsgemäßen Katalysators aus Beispiel 1 bis zum Sieden erhitzt. Im Reaktionsverlauf steigt durch den Umsatz der niedrig siedenden Komponenten zu höher siedenden Produkten die Innentemperatur von ca. 40°C auf ca. 110°C an. Die Reaktion wird beendet, wenn die Siedetemperatur auf hohem Niveau über längere Zeit konstant bleibt. Danach wird abgekühlt und das entstandene Produktionsgemisch gaschromatographisch untersucht. Nach Abkondensation des als Lösungsmittels eingesetzten 3-Chlorpropyltrichlorsilans ergibt sich folgende Produktzusammensetzung:

1,71 Gew.-% Trichlorsilan (TCS)

0,07 Gew.-% Allylchlorid (ACl)

20,58 Gew.-% Siliciumtetrachlorid (STC)

1,12 Gew.-% Propyltrichlorsilan (PTS)

76,03 Gew.-% 3-Chlorpropyltrichlorsilan (Cl-PTS)

Somit ergibt sich für die auf die Stoffmengen bezogene Selektivität der Reaktion ein Wert von 2,96 : 1, was einer Ausbeute von 3-Chlorpropyltrichlorsilan bezogen auf Allylchlorid von 74,7% entspricht.

Beispiel 10

In einem 500 ml Dreihalskolben mit Heizpilz, Magnetrührer, Innenthermometer und einem intensiv auf -30°C gekühlten Rückflußkühler werden 100 g (472 mmol) 3-Chlorpropyltrichlorsilan, 76,6 g (1,0 mol) Allylchlorid und 142,3 g (1,05 mol) Trichlorsilan vermischt und in Anwesenheit von 2,0 g des erfindungsgemäßen Katalysators aus Beispiel 2 bis zum Sieden erhitzt. Im Reaktionsverlauf steigt durch den Umsatz der niedrig siedenden Komponenten zu höher siedenden Produkten die Innentemperatur von ca. 40°C auf ca. 110°C an. Die Reaktion wird beendet, wenn die Siedetemperatur auf hohem Niveau über längere Zeit konstant bleibt. Danach wird abgekühlt und das entstandene Produktionsgemisch gaschromatographisch untersucht. Nach Abkondensation des als Lösungsmittels eingesetzten 3-Chlorpropyltrichlorsilans ergibt sich folgende Produktzusammensetzung:

0,82 Gew.-% Trichlorsilan (TCS)

0,26 Gew.-% Allylchlorid (ACl)

20,18 Gew.-% Siliciumtetrachlorid (STC)

1,15 Gew.-% Propyltrichlorsilan (PTS)

76,96 Gew.-% 3-Chlorpropyltrichlorsilan (Cl-PTS)

Somit ergibt sich für die auf die Stoffmengen bezogene Selektivität der Reaktion ein Wert von 3,06 : 1, was einer Ausbeute von 3-Chlorpropyltrichlorsilan bezogen auf Allylchlorid von 75,4% entspricht.

Beispiel 11

In einem 500 ml Dreihalskolben mit Heizpilz, Magnetrührer, Innenthermometer und einem intensiv auf -30°C gekühlten Rückflußkühler werden 100 g (472 mmol) 3-Chlorpropyltrichlorsilan, 76,6 g (1,0 mol) Allylchlorid und 142,3 g (1,05 mol) Trichlorsilan vermischt und in Anwesenheit von 2,0 g des erfindungsgemäßen Katalysators aus Beispiel 3 bis zum Sieden erhitzt. Im Reaktionsverlauf steigt durch den Umsatz der niedrig siedenden Komponenten zu höher siedenden Produkten die Innentemperatur von ca. 40°C auf ca. 110°C an. Die Reaktion wird beendet, wenn die Siedetemperatur auf hohem Niveau über längere Zeit konstant bleibt. Danach wird abgekühlt und das entstandene Produktionsgemisch gaschromatographisch untersucht. Nach Abkondensation des als Lösungsmittels eingesetzten 3-Chlorpropyltrichlorsilans ergibt sich folgende Produktzusammensetzung:

0,66 Gew.-% Trichlorsilan (TCS)

0,40 Gew.-% Allylchlorid (ACl)

20,31 Gew.-% Siliciumtetrachlorid (STC)

1,03 Gew.-% Propyltrichlorsilan (PTS)

76,92 Gew.-% 3-Chlorpropyltrichlorsilan (Cl-PTS)

Somit ergibt sich für die auf die Stoffmengen bezogene Selektivität der Reaktion ein Wert von 3,04 : 1, was einer Ausbeute von 3-Chlorpropyltrichlorsilan bezogen auf Allylchlorid von 75,2% entspricht.

Beispiel 12

In einem 500 ml Dreihalskolben mit Heizpilz, Magnetrührer, Innenthermometer und einem intensiv auf -30°C gekühlten Rückflußkühler werden 100 g (472 mmol) 3-Chlorpropyltrichlorsilan, 76,6 g (1,0 mol) Allylchlorid und 142,3 g (1,05 mol) Trichlorsilan vermischt und in Anwesenheit von 2,0 g des erfindungsgemäßen Katalysators aus Beispiel 4 bis zum Sieden erhitzt. Im Reaktionsverlauf steigt durch den Umsatz der niedrig siedenden Komponenten zu höher siedenden Produkten die Innentemperatur von ca. 40°C auf ca. 110°C an. Die Reaktion wird beendet, wenn die Siedetemperatur auf hohem Niveau über längere Zeit konstant bleibt. Danach wird abgekühlt und das entstandene Produktionsgemisch gaschromatographisch untersucht. Nach Abkondensation des als Lösungsmittels eingesetzten 3-Chlorpropyltrichlorsilans ergibt sich folgende Produktzusammensetzung:

2,56 Gew.-% Trichlorsilan (TCS)

1,34 Gew.-% Allylchlorid (ACl)

19,55 Gew.-% Siliciumtetrachlorid (STC)

2,76 Gew.-% Propyltrichlorsilan (PTS)

73,79 Gew.-% 3-Chlorpropyltrichlorsilan (Cl-PTS)

Somit ergibt sich für die auf die Stoffmengen bezogene Selektivität der Reaktion ein Wert von 3,03 : 1, was einer Ausbeute von 3-Chlorpropyltrichlorsilan bezogen auf Allylchlorid von 75,2% entspricht.

Beispiel 13

In einem 500 ml Dreihalskolben mit Heizpilz, Magnetrührer, Innenthermometer und einem intensiv auf -30°C gekühlten Rückflußkühler werden 100 g (472 mmol) 3-Chlorpropyltrichlorsilan, 76,6 g (1,0 mol) Allylchlorid und 142,3 g (1,05 mol) Trichlorsilan vermischt und in Anwesenheit von 2,0 g des erfindungsgemäßen Katalysators aus Beispiel 5 bis zum Sieden erhitzt. Im Reaktionsverlauf steigt durch den Umsatz der niedrig siedenden Komponenten zu höher siedenden Produkten die Innentemperatur von ca. 40°C auf ca. 110°C an. Die Reaktion wird beendet, wenn die Siedetemperatur auf hohem Niveau über längere Zeit konstant bleibt. Danach wird abgekühlt und das endstandene Produktionsgemisch gaschromatographisch untersucht. Nach Abkondensation des als Lösungsmittels eingesetzten 3-Chlorpropyltrichlorsilans ergibt sich folgende Produktzusammensetzung:

3,13 Gew.-% Trichlorsilan (TCS)

1,21 Gew.-% Allylchlorid (ACl)

18,75 Gew.-% Siliciumtetrachlorid (STC)

2,40 Gew.-% Propyltrichlorsilan (PTS)

74,51 Gew.-% 3-Chlorpropyltrichlorsilan (Cl-PTS)

Somit ergibt sich für die auf die Stoffmengen bezogene Selektivität der Reaktion ein Wert von 3,19 : 1, was einer Ausbeute von 3-Chlorpropyltrichlorsilan bezogen auf Allylchlorid von 76,1% entspricht.

Beispiel 14

In einem 500 ml Dreihalskolben mit Heizpilz, Magnetrührer, Innenthermometer und einem intensiv auf -30°C gekühlten Rückflußkühler werden 100 g (472 mmol) 3-Chlorpropyltrichlorsilan, 76,6 g (1,0 mol) Allylchlorid und 142,3 g (1,05 mol) Trichlorsilan vermischt und in Anwesenheit von 2,0 g des erfindungsgemäßen Katalysators aus Beispiel 6 bis zum Sieden erhitzt. Im Reaktionsverlauf steigt durch den Umsatz der niedrig siedenden Komponenten zu höher siedenden Produkten die Innentemperatur von ca. 40°C auf ca. 110°C an. Die Reaktion wird beendet, wenn die Siedetemperatur auf hohem Niveau über längere Zeit konstant bleibt. Danach wird abgekühlt und das endstandene Produktionsgemisch gaschromatographisch untersucht. Nach Abkondensation des als Lösungsmittels eingesetzten 3-Chlorpropyltrichlorsilans ergibt sich folgende Produktzusammensetzung:

2,45 Gew.-% Trichlorsilan (TCS)

0,75 Gew.-% Allylchlorid (ACl)

19,15 Gew.-% Siliciumtetrachlorid (STC)

2,37 Gew.-% Propyltrichlorsilan (PTS)

75,27 Gew.-% 3-Chlorpropyltrichlorsilan (Cl-PTS)

Somit ergibt sich für die auf die Stoffmengen bezogene Selektivität der Reaktion ein Wert von 3,15 : 1, was einer Ausbeute von 3-Chlorpropyltrichlorsilan bezogen auf Allylchlorid von 75,9% entspricht.

Beispiel 15 (Vergleichsbeispiel)

In einem 500 ml Dreihalskolben mit Heizpilz, Magnetrührer, Innenthermometer und einem intensiv auf -30°C gekühlten Rückflußkühler werden 100 g (472 mmol) 3-Chlorpropyltrichlorsilan, 76,6 g (1,0 mol) Allylchlorid und 142,3 g (1,05 mol) Trichlorsilan vermischt und in Anwesenheit von 2,0 g des Katalysators aus Beispiel 7 bis zum Sieden erhitzt. Im Reaktionsverlauf steigt durch den Umsatz der niedrig siedenden Komponenten zu höher siedenden Produkten die Innentemperatur von ca. 40°C auf ca. 110°C an. Die Reaktion wird beendet, wenn die Siedetemperatur auf hohem Niveau über längere Zeit konstant bleibt. Danach wird abgekühlt und das entstandene Produktionsgemisch gaschromatographisch untersucht. Nach Abkondensation des als Lösungsmittels eingesetzten 3-Chlorpropyltrichlorsilans ergibt sich folgende Produktzusammensetzung:

25,47 Gew.-% Trichlorsilan (TCS)

1,83 Gew.-% Allylchlorid (ACl)

19,89 Gew.-% Siliciumtetrachlorid (STC)

3,41 Gew.-% Propyltrichlorsilan (PTS)

49,39 Gew.-% 3-Chlorpropyltrichlorsilan (Cl-PTS)

Somit ergibt sich für die auf die Stoffmengen bezogene Selektivität der Reaktion ein Wert von 2,48 : 1, was einer Ausbeute von 3-Chlorpropyltrichlorsilan bezogen auf Allylchlorid von 71,3% entspricht.

Beispiel 16 (Vergleichsbeispiel)

In einem 500 ml Dreihalskolben mit Heizpilz, Magnetrührer, Innenthermometer und einem intensiv auf -30°C gekühlten Rückflußkühler werden 100 g (472 mmol) 3-Chlorpropyltrichlorsilan, 76,6 g (1,0 mol) Allylchlorid und 142,3 g (1,05 mol) Trichlorsilan vermischt und in Anwesenheit von 2,0 g des Katalysators aus Beispiel 8 bis zum Sieden erhitzt. Im Reaktionsverlauf steigt durch den Umsatz der niedrig siedenden Komponenten zu höher siedenden Produkten die Innentemperatur von ca. 40°C auf ca. 110°C an. Die Reaktion wird beendet, wenn die Siedetemperatur auf hohem Niveau über längere Zeit konstant bleibt. Danach wird abgekühlt und das entstandene Produktionsgemisch gaschromatographisch untersucht. Nach Abkondensation des als Lösungsmittels eingesetzten 3-Chlorpropyltrichlorsilans ergibt sich folgende Produktzusammensetzung:

9,36 Gew.-% Trichlorsilan (TCS)

5,86 Gew.-% Allylchlorid (ACl)

20,02 Gew.-% Siliciumtetrachlorid (STC)

3,67 Gew.-% Propyltrichlorsilan (PTS)

60,27 Gew.-% 3-Chlorpropyltrichlorsilan (Cl-PTS)

Somit ergibt sich für die auf die Stoffmengen bezogene Selektivität der Reaktion ein Wert von 2,41 : 1, was einer Ausbeute von 3-Chlorpropyltrichlorsilan bezogen auf Allylchlorid von 70,7% entspricht.

**Patentansprüche**

1.  Verfahren zur Herstellung von 3-funktionalisierten Propylsilanen durch Addition von Allylverbindungen der allgemeinen Formel IV

$$H_2C=CH-CH_2X \qquad\qquad (IV),$$

wobei X = Cl, Br, I, F, CN, SCN, SH, SR, OH, NRR$^1$ und OR sein kann und R und R$^1$, beide unabhängig voneinander, $(C_1 - C_6)$-Alkyl oder $(C_3 - C_7)$-Aryl bedeuten,
an Silane der Forml V

$$R^2R^3R^4SiH \qquad\qquad (V),$$

wobei R$^2$, R$^3$, R$^4$, alle unabhängig voneinander, Wasserstoff, Halogen, $(C_1 - C_6)$-Alkyl, $(C_1 - C_6)$-Haloalkyl, $(C_3 - C_6)$-Allyl, $(C_1 - C_4)$Alkoxy, Phenyl, Aryl oder Aralkyl bedeuten können,
bei Reaktionstemperaturen zwischen 0 °C und 200 °C und Drücken zwischen 200 mbar und 10 bar in Gegenwart eines Katalysators,
**dadurch gekennzeichnet,**
**daß** der Katalysator ein geträgerter Multielementkatalysator ist, der einen Aktivkohle-, Koks- oder Graphit-Träger, Platin und mindestens ein weiteres Element aus der Reihe Titan, Zirkonium, Hafnium, Vanadium, Chrom, Molybdän, Wolfram, Mangan, Rhenium, Eisen, Ruthenium, Osmium, Kobalt, Rhodium, Iridium, Nickel, Kupfer, Silber, Gold, Kobalt, Zink, Aluminium, Gallium, Indium, Zinn, Blei, Antimon, Bismut, Samarium, Schwefel

**2.** Verfahren nach Anspruch 1,
**dadurch gekennzeichnet,**
**daß** als Silan der Forml V Trichlorsilan, Methylhydrogendichlorsilan, Propylhydrogendichlorsilan oder Dimethylhydrogenchlorsilan verwendet wird.

**3.** Verfahren nach Anspruch 1,
**dadurch gekennzeichnet,**
**daß** die Platinkomponente eine anorganische, organische oder metallorganische Platinverbindung ist.

## Claims

**1.** A process for preparing a 3-functionalized propylsilane by addition of an allyl compound of the general formula IV

$$H_2C=CH-CH_2X \tag{IV}$$

where X is selected from the group consisting of Cl, Br, I, F, CN, SCN, SH, SR, OH, $NRR^1$ and OR and R and $R^1$ are each independently $(C_1-C_6)$-alkyl or $(C_3-C_7)$-aryl, onto a silane of the formula V

$$R^2R^3R^4SiH \tag{V}$$

where $R^2$, $R^3$ and $R^4$ are each independently selected from the group consisting of hydrogen, halogen, $(C_1-C_6)$-alkyl, $(C_1-C_6)$-haloalkyl, $(C_3-C_6)$-allyl, $(C_1-C_4)$-alkoxy, phenyl, aryl and aralkyl,
at a reaction temperature in the range from 0°C to 200°C and at a pressure in the range from 200 mbar to 10 bar in the presence of a catalyst, **characterized in that** the catalyst is a supported multielement catalyst comprising an activated carbon, coke or graphite support, platinum and at least one further element selected from the group consisting of titanium, zirconium, hafnium, vanadium, chromium, molybdenum, tungsten, manganese, rhenium, iron, ruthenium, osmium, cobalt, rhodium, iridium, nickel, copper, silver, gold, cobalt, zinc, aluminium, gallium, indium, tin, lead, antimony, bismuth, samarium and sulphur.

**2.** A process according to claim 1, **characterized in that** trichlorosilane, methylhydrodichlorosilane, propylhydrodichlorosilane or dimethylhydrochlorosilane is used as silane of the formula V.

**3.** A process according to claim 1, **characterized in that** the platinum component is an inorganic platinum compound, an organic platinum compound or an organometallic platinum compound.

## Revendications

**1.** Procédé de fabrication de propylsilanes fonctionnalisés en position 3 par addition de composés d'allyle de formule générale IV,

$$H_2C=CH-CH_2X \tag{IV}$$

dans laquelle
X peut signifier Cl, Br, I, F, CN, SCN, SH, SR, OH, $NRR^1$ et OR,
R et $R^1$, indépendamment l'un de l'autre, représentent un groupe alkyle en $(C_1$ à $C_6)$ ou aryle en $(C_3$ à $C_7)$,
sur des silanes de formule V

$$R^2R^3R^4SiH \tag{V},$$

dans laquelle $R^2$, $R^3$, $R^4$, indépendamment l'un de l'autre, peuvent représenter un hydrogène, halogène, un groupe alkyle en $(C_1$ à $C_6)$, haloalkyle en $(C_1$ à $C_6)$, allyle en $(C_3$ à $C_6)$, alcoxy en $(C_1$ à $C_4)$, phényle, aryle ou aralkyle,

à des températures de réaction comprises entre 0 et 200°C et à des pressions comprises entre 200 mbars et 10 bars en présence d'un catalyseur,
**caractérisé en ce que**
le catalyseur est un catalyseur multi-élément supporté par un support de charbon actif, de coke ou de graphite, et qui contient du platine et au moins un autre élément de la série titane, zirconium, hafnium, vanadium, chrome, molybdène, tungstène, manganèse, rhénium, fer, ruthénium, osmium, cobalt, rhodium, iridium, nickel, cuivre, argent, or, cobalt, zinc, aluminium, gallium, indium, étain, plomb, antimoine, bismuth, samarium, soufre.

2. Procédé selon la revendication 1,
**caractérisé en ce qu'**
on utilise comme silane de formule V, du trichlorosilane, du méthylhydrogénodichlorosilane, du propylhydrogénodichlorosilane ou du diméthylhydrogénochlorosilane.

3. Procédé selon la revendication 1,
**caractérisé en ce que**
le composant platine est un composé de platine inorganique, organique ou métalorganique.